# EUROPEAN PATENT APPLICATION

(11) **EP 4 838 456 A1**
(43) Date of publication of application: **11.11.2026**
(21) Application number: 24915000.4
(22) Date of filing: 11.11.2024
(51) Int. Cl.: G06T 5/50, G06T 7/00

(54) **IMAGE PROCESSING METHOD AND APPARATUS, STORAGE MEDIUM, AND ELECTRONIC DEVICE**

(30) Priority: 05.01.2024 CN 202410023259
(71) Applicant: Huizhou TCL Mobile Communication Co., Ltd, Guangdong 516006 (CN)
(72) Inventor: XU, Nan, Huizhou, Guangdong 516006 (CN)
(74) Representative: Herrero & Asociados, S.L.
(86) International application number: PCT/CN2024/131390
(87) International publication number: WO 2025/145784

(57) **Abstract**

The present disclosure relates to the technical field of image processing, and discloses an image processing method and apparatus, a storage medium, and an electronic device. The method comprises: selecting a basic image of which image quality information meets a preset quality condition; selecting an eye image of which eye-opening state information is matched with that of the basic image; and on the basis of the basic image and the eye image, performing multi-frame fusion processing on a plurality of images to be processed to obtain a processed image. The present disclosure can improve the eye-opening effect of images, and improve the user experience.

## Description

This application claims priority to Chinese Application No. 202410023259.1 on January 5, 2024, entitled "IMAGE PROCESSING METHOD AND APPARATUS, STORAGE MEDIUM, AND ELECTRONIC DEVICE", the contents of which are incorporated herein by reference in their entirety.

### FIELD OF THE INVENTION

The present disclosure relates to the technical field of image processing and, more particularly, to an image processing method, an apparatus, a storage medium, and an electronic device.

### BACKGROUND

In scenarios such as photographing, along with continuous improvement of image processing technologies, users have increasingly higher requirements for images. Many photographing devices also provide image processing means to improve image effects. However, due to existence of various factors, a large number of photographed objects naturally blink during photographing, thereby often resulting in photographs having poor eye-opening effects such as closed eyes.

### Technical Problem

Existing related image processing means often cannot effectively process such images, and such images are often treated as discarded images, thereby affecting user experience.

### SUMMARY

Embodiments of the present disclosure provide an image processing solution, which can effectively improve an eye-opening effect of an image and improve user experience.

Embodiments of the present disclosure provide following technical solutions.

According to an embodiment of the present disclosure, an image processing method is provided, including: performing image detection on a plurality of to-be-processed images to obtain image quality information and eye-opening state information corresponding to each of the to-be-processed images; selecting, from the plurality of to-be-processed images, a to-be-processed image of which the image quality information satisfies a predetermined quality condition, to obtain a base image; selecting, from the plurality of to-be-processed images, a to-be-processed image of which the eye-opening state information matches the base image, to obtain an eye image; and performing multi-frame fusion processing on the plurality of to-be-processed images based on the base image and the eye image, to obtain a processed image.

In some embodiments of the present disclosure, the performing the multi-frame fusion processing on the plurality of to-be-processed images based on the base image and the eye image, to obtain the processed image, includes: in response to the base image and the eye image not being a same image, performing multi-frame denoising synthesis on the plurality of to-be-processed images by taking the base image as a base frame, to obtain a first fusion denoised image; and fusing an eye region in the eye image into the first fusion denoised image, to obtain the processed image.

In some embodiments of the present disclosure, the eye-opening state information is information used for describing whether eyes are in an opened state; the selecting, from the plurality of to-be-processed images, the to-be-processed image of which the eye-opening state information matches the base image, to obtain the eye image, includes: selecting, from the plurality of to-be-processed images according to the eye-opening state information corresponding to each of the to-be-processed images, a to-be-processed image in which the eyes are in the opened state; and selecting, from the to-be-processed image in which the eyes are in the opened state, a to-be-processed image having a highest image quality, to obtain the eye image.

In some embodiments of the present disclosure, the eye-opening state information is information used for describing an eye-opening degree and an eye-opening posture of eyes; the selecting, from the plurality of to-be-processed images, the to-be-processed image of which the eye-opening state information matches the base image, to obtain the eye image, includes: performing object feature extraction processing on the base image, to obtain object feature data; obtaining object state information according to the object feature data, wherein the object state information is information used for describing an object posture of a target object; and performing matching analysis between the eye-opening state information of each of the to-be-processed images and the object state information, to obtain the eye image, wherein the eye image is a to-be-processed image corresponding to eye-opening state information matching the object state information.

In some embodiments of the present disclosure, the performing the matching analysis between the eye-opening state information of each of the to-be-processed images and the object state information, to obtain the eye image, includes: performing state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and selecting one to-be-processed image according to the state fusion score corresponding to each of the to-be-processed images, to obtain the eye image.

In some embodiments of the present disclosure, the object state information includes face state information and body state information of the target object; the performing the state combination scoring processing on the eye-opening state information of each of the to-be-processed images and the object state information respectively, to obtain the state fusion score corresponding to each of the to-be-processed images, includes: performing state combination scoring on the eye-opening state information of each of the to-be-processed images and the face state information respectively, to obtain a first score corresponding to each of the to-be-processed images; performing state combination scoring on the eye-opening state information of each of the to-be-processed images and the body state information respectively, to obtain a second score corresponding to each of the to-be-processed images; and obtaining the state fusion score corresponding to each of the to-be-processed images according to the first score and the second score corresponding to each of the to-be-processed images.

In some embodiments of the present disclosure, the obtaining the state fusion score corresponding to each of the to-be-processed images according to the first score and the second score corresponding to each of the to-be-processed images, includes: obtaining a weighting coefficient matching the object state information according to the object state information; and performing weighted summation on the first score and the second score corresponding to each of the to-be-processed images according to the weighting coefficient respectively, to obtain the state fusion score corresponding to each of the to-be-processed images.

In some embodiments of the present disclosure, the performing the multi-frame fusion processing on the plurality of to-be-processed images based on the base image and the eye image, to obtain the processed image, includes: in response to the base image and the eye image being a same image, performing multi-frame denoising synthesis on the plurality of to-be-processed images by taking the base image as a base frame, to obtain a second fusion denoised image; and obtaining the processed image according to the second fusion denoised image.

In some embodiments of the present disclosure, the selecting, from the plurality of to-be-processed images, the to-be-processed image of which the image quality information satisfies the predetermined quality condition, to obtain the base image, includes one of following manners: selecting, from the plurality of to-be-processed images according to the image quality information in each of the to-be-processed images, a to-be-processed image having a highest image quality, to obtain the base image; or selecting, from the plurality of to-be-processed images according to the image quality information in each of the to-be-processed images, one or more to-be-processed images having an image quality higher than a predetermined quality threshold, to obtain the base image.

In some embodiments of the present disclosure, the image quality information includes, but is not limited to, one or more of image sharpness, resolution, contrast, brightness, noise level, color balance, image distortion degree, and aberration degree.

According to an embodiment of the present disclosure, an image processing apparatus is provided. The apparatus includes: a detection module configured to perform image detection on a plurality of to-be-processed images to obtain image quality information and eye-opening state information corresponding to each of the to-be-processed images; a selection module configured to select, from the plurality of to-be-processed images, a to-be-processed image of which the image quality information satisfies a predetermined quality condition, to obtain a base image; a matching module configured to select, from the plurality of to-be-processed images, a to-be-processed image of which the eye-opening state information matches the base image, to obtain an eye image; and a fusion module configured to perform multi-frame fusion processing on the plurality of to-be-processed images based on the base image and the eye image, to obtain a processed image.

In some embodiments of the present disclosure, the fusion module is configured to: in response to the base image and the eye image not being a same image, perform multi-frame denoising synthesis on the plurality of to-be-processed images by taking the base image as a base frame, to obtain a first fusion denoised image; and fuse an eye region in the eye image into the first fusion denoised image, to obtain the processed image.

In some embodiments of the present disclosure, the eye-opening state information is information used for describing whether eyes are in an opened state; the matching module is configured to: select, from the plurality of to-be-processed images according to the eye-opening state information corresponding to each of the to-be-processed images, a to-be-processed image in which the eyes are in the opened state; and select, from the to-be-processed image in which the eyes are in the opened state, a to-be-processed image having a highest image quality, to obtain the eye image.

In some embodiments of the present disclosure, the eye-opening state information is information used for describing an eye-opening degree and an eye-opening posture of eyes; the matching module is configured to: perform object feature extraction processing on the base image, to obtain object feature data; obtain object state information according to the object feature data, wherein the object state information is information used for describing an object posture of a target object; and perform matching analysis between the eye-opening state information of each of the to-be-processed images and the object state information, to obtain the eye image, wherein the eye image is a to-be-processed image corresponding to eye-opening state information matching the object state information.

In some embodiments of the present disclosure, the matching module is configured to: perform state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and select one to-be-processed image according to the state fusion score corresponding to each of the to-be-processed images, to obtain the eye image.

In some embodiments of the present disclosure, the object state information includes face state information and body state information of the target object; the matching module is configured to: perform state combination scoring on the eye-opening state information of each of the to-be-processed images and the face state information respectively, to obtain a first score corresponding to each of the to-be-processed images; perform state combination scoring on the eye-opening state information of each of the to-be-processed images and the body state information respectively, to obtain a second score corresponding to each of the to-be-processed images; and obtain the state fusion score corresponding to each of the to-be-processed images according to the first score and the second score corresponding to each of the to-be-processed images.

In some embodiments of the present disclosure, the matching module is configured to: obtain a weighting coefficient matching the object state information according to the object state information; and perform weighted summation on the first score and the second score corresponding to each of the to-be-processed images according to the weighting coefficient respectively, to obtain the state fusion score corresponding to each of the to-be-processed images.

In some embodiments of the present disclosure, the fusion module is configured to: in response to the base image and the eye image being a same image, perform multi-frame denoising synthesis on the plurality of to-be-processed images by taking the base image as a base frame, to obtain a second fusion denoised image; and obtain the processed image according to the second fusion denoised image.

In some embodiments of the present disclosure, the selection module is configured to implement one of following manners: selecting, from the plurality of to-be-processed images according to the image quality information in each of the to-be-processed images, a to-be-processed image having a highest image quality, to obtain the base image; or selecting, from the plurality of to-be-processed images according to the image quality information in each of the to-be-processed images, one or more to-be-processed images having an image quality higher than a predetermined quality threshold, to obtain the base image.

In some embodiments of the present disclosure, the image quality information includes, but is not limited to, one or more of image sharpness, resolution, contrast, brightness, noise level, color balance, image distortion degree, and aberration degree.

According to another embodiment of the present disclosure, a storage medium is provided, wherein a computer program is stored thereon, and when the computer program is executed by a processor of a computer, the computer is caused to execute the method described in the embodiments of the present disclosure.

According to another embodiment of the present disclosure, an electronic device is provided, which may include: a memory storing a computer program; and a processor configured to read the computer program stored in the memory to execute the method described in the embodiments of the present disclosure.

According to another embodiment of the present disclosure, a computer program product or a computer program is provided. The computer program product or the computer program includes a computer instruction, and the computer instruction is stored in a computer-readable storage medium. A processor of a computer device reads the computer instruction from the computer-readable storage medium, and executes the computer instruction, such that the computer device executes the method provided in various optional implementations described in the embodiments of the present disclosure.

### Advantageous Effects

In the embodiments of the present disclosure, image detection is performed on a plurality of to-be-processed images to obtain image quality information and eye-opening state information corresponding to each of the to-be-processed images; a to-be-processed image of which the image quality information satisfies a predetermined quality condition is selected from the plurality of to-be-processed images to obtain a base image; a to-be-processed image of which the eye-opening state information matches the base image is selected from the plurality of to-be-processed images to obtain an eye image; and multi-frame fusion processing is performed on the plurality of to-be-processed images based on the base image and the eye image, to obtain a processed image.

In this manner, first, a to-be-processed image of which the image quality information satisfies the predetermined quality condition is selected from the plurality of to-be-processed images as the base image. Then, a to-be-processed image of which the eye-opening state information matches the base image is selected as the eye image. The plurality of to-be-processed images are subjected to multi-frame fusion based on the base image and the eye image to obtain the processed image. Since the eye-opening state information of the eye image matches the base image, an eye-opening effect of the processed image obtained through multi-frame fusion can be very good, thereby effectively improving the eye-opening effect of the image and improving user experience.

### BRIEF DESCRIPTION OF THE DRAWINGS

In order to more clearly illustrate the technical solutions in the embodiments of the present disclosure, the drawings to be used in the description of the embodiments are briefly introduced below. It is obvious that the drawings in the following description merely show some embodiments of the present disclosure. For those skilled in the art, other drawings can also be obtained based on these drawings without any inventive effort.
FIG. 1 illustrates a flowchart of an image processing method according to an embodiment of the present disclosure.
FIG. 2 illustrates a flowchart of image selection according to an embodiment of the present disclosure.
FIG. 3 illustrates a flowchart of image selection according to another embodiment of the present disclosure.
FIG. 4 illustrates a block diagram of an image processing apparatus according to an embodiment of the present disclosure.
FIG. 5 illustrates a block diagram of an electronic device according to an embodiment of the present disclosure.

### DETAILED DESCRIPTION OF THE PRESENT DISCLOSURE

The present disclosure will be further described in detail below with reference to accompanying drawings and embodiments. It should be understood that the embodiments provided herein are merely used for explaining the present disclosure, and are not intended to limit the present disclosure. In addition, the embodiments provided below are some embodiments for implementing the present disclosure, rather than all embodiments for implementing the present disclosure. Technical solutions described in the embodiments of the present disclosure may be implemented in any combination manner without conflict.

It should be noted that, in the embodiments of the present disclosure, the terms "include", "comprise", or any other variations thereof are intended to cover non-exclusive inclusion, such that a method or an apparatus including a series of elements not only includes elements explicitly recited, but also includes other elements not explicitly listed, or further includes elements inherent to implementation of the method or the apparatus. Without further limitations, an element defined by the statement "including one ..." does not exclude existence of additional related elements in the method or the apparatus including the element (for example, steps in the method or units in the apparatus, wherein the units may be partial circuits, partial processors, partial programs, software, and the like).

For example, the image processing method provided in the embodiments of the present disclosure includes a series of steps. However, the image processing method provided in the embodiments of the present disclosure is not limited to the recited steps. Similarly, the image processing apparatus provided in the embodiments of the present disclosure includes a series of units. However, the apparatus provided in the embodiments of the present disclosure is not limited to including the explicitly recited units, and may further include units required for acquiring related information or performing processing based on information.

Unless otherwise defined, all technical and scientific terms used herein have meanings generally understood by those skilled in the technical field of the present disclosure. Terms used herein are merely for purposes of describing specific embodiments, and are not intended to limit the present disclosure.

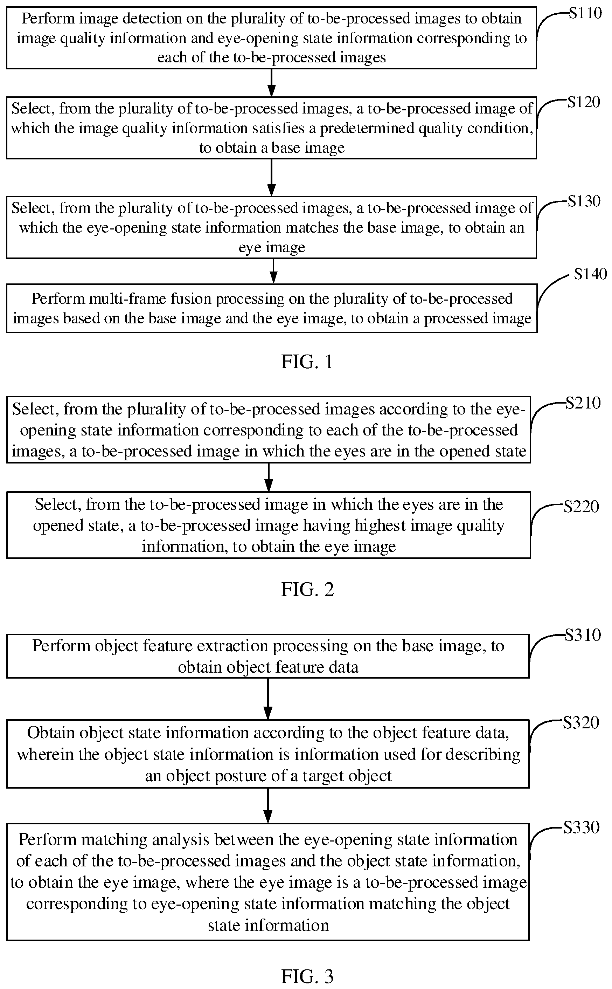

FIG. 1 schematically illustrates a flowchart of an image processing method according to an embodiment of the present disclosure. An execution subject of the image processing method may be any device or server having processing capability. The device may be, for example, a television, a computer, a mobile phone, a smart watch, a household appliance device, or the like. The server may be, for example, a cloud server or a physical server.

As illustrated in FIG. 1, the image processing method may include step S110 to step S140.

In step S110, image detection is performed on the plurality of to-be-processed images to obtain image quality information and eye-opening state information corresponding to each of the to-be-processed images.
In step S120, a to-be-processed image of which the image quality information satisfies a predetermined quality condition is selected from the plurality of to-be-processed images, to obtain a base image.
In step S130, a to-be-processed image of which the eye-opening state information matches the base image is selected from the plurality of to-be-processed images, to obtain an eye image. In step S140, multi-frame fusion processing is performed on the plurality of to-be-processed images based on the base image and the eye image, to obtain a processed image.

The plurality of to-be-processed images may be a plurality of images (for example, 6 images) in an image sequence obtained through real-time photographing. The plurality of to-be-processed images may also be a plurality of consecutive images stored at a predetermined position rather than obtained through real-time photographing. A quantity of the plurality of to-be-processed images may be set according to actual conditions.

After the plurality of to-be-processed images are obtained, image detection may be respectively performed on the plurality of to-be-processed images to obtain image quality information and eye-opening state information corresponding to each of the to-be-processed images. For example, image detection may be respectively performed on the plurality of to-be-processed images through a preset image detection neural network.

The image quality information is information capable of reflecting image quality. The image quality information may include, but is not limited to, one or more of image sharpness, resolution, contrast, brightness, noise level, color balance, image distortion degree, and aberration degree. In one embodiment of the present disclosure, the image quality information is specifically image sharpness.

The eye-opening state information is information capable of reflecting an eye-opening state of eyes in an image. The eye-opening state information may be information such as whether the eyes are opened, an eye-opening degree, or an eye-opening score.

A to-be-processed image of which the image quality information satisfies the predetermined quality condition is selected from the plurality of to-be-processed images, to obtain the base image. For example, a to-be-processed image having a highest sharpness may be selected as the base image.

Further, a to-be-processed image of which the eye-opening state information matches the base image may be selected from the plurality of to-be-processed images, to obtain the eye image. It can be understood that the base image and the eye image may be a same image or may not be a same image.

Multi-frame fusion processing is performed on the plurality of to-be-processed images based on the base image and the eye image, to obtain the processed image. Generally, it can be ensured that the processed image has high image quality and eyes in the image are opened. On this basis, the opened-eye state in the processed image is more coordinated compared with related technologies.

In this manner, based on step S110 to step S140, first, a to-be-processed image having a highest image quality is selected from the plurality of to-be-processed images as the base image. Then, a to-be-processed image of which the eye-opening state information matches the base image is selected as the eye image. The plurality of to-be-processed images are subjected to multi-frame fusion based on the base image and the eye image to obtain the processed image. Since the eye-opening state information of the eye image matches the base image, an eye-opening effect of the processed image obtained through multi-frame fusion can be very good, thereby effectively improving the eye-opening effect of the image and improving user experience.

Further optional specific embodiments of each step performed during image processing in the embodiment of FIG. 1 will be described below.

In one embodiment, the selecting, from the plurality of to-be-processed images, the to-be-processed image of which the image quality information satisfies the predetermined quality condition, to obtain the base image, includes one of following manners.

In a first manner, according to the image quality information in each of the to-be-processed images, a to-be-processed image having a highest image quality is selected from the plurality of to-be-processed images, to obtain the base image.

In a second manner, according to the image quality information in each of the to-be-processed images, one or more to-be-processed images having an image quality higher than a predetermined quality threshold are selected from the plurality of to-be-processed images, to obtain the base image.

In the first manner, a to-be-processed image having a highest image quality is selected from the plurality of to-be-processed images as the obtained base image. Specifically, the to-be-processed image having the highest image quality may be a to-be-processed image having a highest image quality reflected by image sharpness or other image quality information among the plurality of to-be-processed images. Selecting the to-be-processed image having the highest image quality can effectively ensure image quality of the processed image obtained through fusion.

In the second manner, one or more to-be-processed images having an image quality higher than the predetermined quality threshold are selected from the plurality of to-be-processed images as the obtained base image. Accordingly, the base image may be one image or multiple images. The predetermined quality threshold may be set according to actual conditions. In response to the base image being one image, one processed image is finally generated. In response to the base image being multiple images, step S130 and step S140 are respectively performed based on each base image, such that multiple processed images are generated.

In one embodiment, with reference to FIG. 2, the eye-opening state information is information used for describing whether eyes are in an opened state. The selecting, from the plurality of to-be-processed images, the to-be-processed image of which the eye-opening state information matches the base image, to obtain the eye image, may include:
step S210, selecting, from the plurality of to-be-processed images according to the eye-opening state information corresponding to each of the to-be-processed images, a to-be-processed image in which the eyes are in the opened state; and
step S220, selecting, from the to-be-processed image in which the eyes are in the opened state,
a to-be-processed image having a highest image quality, to obtain the eye image.

In this embodiment, a to-be-processed image having a highest image quality (that is, image quality reflected by the image quality information) is selected from the to-be-processed images in which the eyes are in the opened state among the plurality of to-be-processed images, as the eye image, thereby effectively ensuring quality, eye-opening rate, and coordination of the processed image obtained through fusion.

Specifically, the eye-opening state information is information used for describing whether eyes are in the opened state. For example, the eye-opening state information may be information such as eyes being opened or eyes being closed. First, according to the eye-opening state information corresponding to each of the to-be-processed images, a to-be-processed image in which the eyes are in the opened state may be selected from the plurality of to-be-processed images. Further, a to-be-processed image having a highest image quality may be selected from the to-be-processed images in which the eyes are in the opened state, as the obtained eye image.

In one embodiment, with reference to FIG. 3, the eye-opening state information is information used for describing an eye-opening degree and an eye-opening posture of eyes. The selecting, from the plurality of to-be-processed images, the to-be-processed image of which the eye-opening state information matches the base image, to obtain the eye image, may include: step S310, performing object feature extraction processing on the base image, to obtain object feature data;
step S320, obtaining object state information according to the object feature data, wherein the object state information is information used for describing an object posture of a target object; and
step S330, performing matching analysis between the eye-opening state information of each of the to-be-processed images and the object state information, to obtain the eye image, wherein the eye image is a to-be-processed image corresponding to eye-opening state information matching the object state information.

In this embodiment, a to-be-processed image corresponding to eye-opening state information matching the object state information in the base image is selected from the plurality of to-be-processed images as the eye image, thereby effectively ensuring quality and eye-opening rate of the processed image obtained through fusion, and further effectively improving eye-opening coordination.

The eye-opening state information is information used for describing an eye-opening degree and an eye-opening posture of eyes. For example, one type of eye-opening state information includes an eye-opening degree A1 and an eye-opening posture B1, and another type of eye-opening state information includes an eye-opening degree A2 and an eye-opening posture B3.

By using a preset feature extraction neural network, object feature extraction processing may be performed on the base image to obtain object feature data of a target object (that is, an object such as a person or an animal in the base image). Further, by using a preset state analysis neural network, analysis may be performed according to the object feature data, so as to obtain object state information. The object state information is information used for describing an object posture of the target object.

Further, by respectively performing matching analysis between the eye-opening state information of each of the to-be-processed images and the object state information, the eye image may be obtained, wherein the eye image is a to-be-processed image corresponding to eye-opening state information matching the object state information.

For example, matching analysis is performed between eye-opening state information of a to-be-processed image T1 and object state information T0 of the base image, to obtain a matching analysis result corresponding to the to-be-processed image T1. Matching analysis is performed between eye-opening state information of a to-be-processed image T2 and the object state information T0 of the base image, to obtain a matching analysis result corresponding to the to-be-processed image T2, and so on, thereby obtaining matching analysis results corresponding to all of the to-be-processed images. Accordingly, the "to-be-processed image corresponding to eye-opening state information matching the object state information of the base image" may be determined according to all of the matching analysis results, as the eye image.

Further, in one embodiment, the performing the matching analysis between the eye-opening state information of each of the to-be-processed images and the object state information, to obtain the eye image, may include:

performing state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and selecting one to-be-processed image according to the state fusion score corresponding to each of the to-be-processed images, to obtain the eye image.

In this embodiment, during the matching analysis, specifically, a preset state fusion scoring neural network may be used to perform state combination scoring processing on the eye-opening state information of each of the to-be-processed images and the object state information respectively, to obtain the state fusion score corresponding to each of the to-be-processed images. The state fusion score is a state fusion score between eyes in the to-be-processed image and the target object in the base image. The state fusion score serves as one type of matching analysis result. A higher state fusion score indicates that a state fusion effect between the eyes in the corresponding to-be-processed image and the target object in the base image is better.

For example, state combination scoring processing is performed on eye-opening state information of a to-be-processed image T1 and object state information T0 of the base image, to obtain a state fusion score corresponding to the to-be-processed image T1. State combination scoring processing is performed on eye-opening state information of a to-be-processed image T2 and the object state information T0 of the base image, to obtain a state fusion score corresponding to the to-be-processed image T2, and so on, thereby obtaining state fusion scores corresponding to all of the to-be-processed images.

One to-be-processed image is selected according to the state fusion score corresponding to each of the to-be-processed images, as the obtained eye image. Specifically, a to-be-processed image having a highest state fusion score may be selected as the obtained eye image. An eye-opening state in the processed image obtained through multi-frame fusion based on the eye image is more coordinated, thereby further improving an image fusion effect.

Further, in one embodiment, the object state information includes face state information and body state information of the target object. The performing the state combination scoring processing on the eye-opening state information of each of the to-be-processed images and the object state information respectively, to obtain the state fusion score corresponding to each of the to-be-processed images, includes: performing state combination scoring on the eye-opening state information of each of the to-be-processed images and the face state information respectively, to obtain a first score corresponding to each of the to-be-processed images; performing state combination scoring on the eye-opening state information of each of the to-be-processed images and the body state information respectively, to obtain a second score corresponding to each of the to-be-processed images; and obtaining the state fusion score corresponding to each of the to-be-processed images according to the first score and the second score corresponding to each of the to-be-processed images.

In this embodiment, the object state information includes face state information and body state information of the target object. The face state information is information capable of reflecting states such as facial expressions or postures of a face of the target object. The body state information is information capable of reflecting states such as body postures or poses of an entire body of the target object. The state fusion score is comprehensively obtained according to scores of the face state information and the body state information respectively, thereby further improving accuracy of the state fusion score in reflecting a state fusion effect between eyes in the to-be-processed image and the target object in the base image, and further improving an image fusion effect.

Further, state combination scoring is respectively performed on the eye-opening state information of each of the to-be-processed images and the face state information, to obtain a first score corresponding to each of the to-be-processed images. Then, state combination scoring is respectively performed on the eye-opening state information of each of the to-be-processed images and the body state information, to obtain a second score corresponding to each of the to-be-processed images. Then, the state fusion score corresponding to each of the to-be-processed images is comprehensively obtained according to the first score and the second score corresponding to each of the to-be-processed images.

For example, state combination scoring is performed on eye-opening state information of a to-be-processed image T1 and face state information T0-1 of the base image, to obtain a first score T1-P1 corresponding to the to-be-processed image T1. State combination scoring is performed on the eye-opening state information of the to-be-processed image T1 and body state information T0-2 of the base image, to obtain a second score T1-P2 corresponding to the to-be-processed image T1. Then, a state fusion score T1-P corresponding to the to-be-processed image T1 is obtained according to the first score T1-P1 and the second score T1-P2. By analogy, state fusion scores corresponding to all of the to-be-processed images are obtained.

In some other embodiments, the object state information may include only the face state information of the target object. The performing the state combination scoring processing on the eye-opening state information of each of the to-be-processed images and the object state information respectively, to obtain the state fusion score corresponding to each of the to-be-processed images, includes: performing state combination scoring on the eye-opening state information of each of the to-be-processed images and the face state information respectively, to obtain a first score corresponding to each of the to-be-processed images; and obtaining the state fusion score corresponding to each of the to-be-processed images according to the first score corresponding to each of the to-be-processed images (for example, the first score corresponding to each of the to-be-processed images may be used as the obtained state fusion score corresponding to each of the to-be-processed images).

Further, the obtaining the state fusion score corresponding to each of the to-be-processed images according to the first score and the second score corresponding to each of the to-be-processed images may specifically include: obtaining a weighting coefficient matching the object state information according to the object state information; and performing weighted summation on the first score and the second score corresponding to each of the to-be-processed images according to the weighting coefficient respectively, to obtain the state fusion score corresponding to each of the to-be-processed images.

Corresponding weighting coefficients may be preset for different object state information. The weighting coefficient matching the object state information is obtained according to the object state information. Weighted summation is performed on the first score and the second score corresponding to each of the to-be-processed images according to the weighting coefficient respectively, to obtain the state fusion score corresponding to each of the to-be-processed images, thereby further effectively ensuring accuracy of the state fusion score in reflecting the state fusion effect between eyes in the to-be-processed image and the target object in the base image.

In some other embodiments, the obtaining the state fusion score corresponding to each of the to-be-processed images according to the first score and the second score corresponding to each of the to-be-processed images may include: performing calculations such as addition or multiplication on the first score and the second score corresponding to each of the to-be-processed images, to obtain the state fusion score corresponding to each of the to-be-processed images.

In some other embodiments, the obtaining the state fusion score corresponding to each of the to-be-processed images according to the first score and the second score corresponding to each of the to-be-processed images may include: obtaining a unified weighting coefficient; and performing weighted summation on the first score and the second score corresponding to each of the to-be-processed images according to the unified weighting coefficient respectively, to obtain the state fusion score corresponding to each of the to-be-processed images. The unified weighting coefficient is a weighting coefficient uniformly set for all situations without distinguishing object state information.

In one embodiment, the performing the multi-frame fusion processing on the plurality of to-be-processed images based on the base image and the eye image, to obtain the processed image, includes: in response to the base image and the eye image not being a same image, performing multi-frame denoising synthesis on the plurality of to-be-processed images by taking the base image as a base frame, to obtain a first fusion denoised image; and fusing an eye region in the eye image into the first fusion denoised image, to obtain the processed image.

In response to the base image and the eye image not being a same image, first, multi-frame denoising synthesis is performed on the plurality of to-be-processed images by taking the base image as the base frame, to obtain the first fusion denoised image. Then, after the eye region is extracted from the eye image, the eye region in the eye image is fused into an eye position in the first fusion denoised image, to obtain the processed image. Herein, a manner of multi-frame denoising synthesis may be implemented through an existing multi-frame fusion denoising means.

In one embodiment, the performing the multi-frame fusion processing on the plurality of to-be-processed images based on the base image and the eye image, to obtain the processed image, may include: in response to the base image and the eye image being a same image, performing multi-frame denoising synthesis on the plurality of to-be-processed images by taking the base image as a base frame, to obtain a second fusion denoised image; and obtaining the processed image according to the second fusion denoised image.

In response to the base image and the eye image being a same selected image, multi-frame denoising synthesis is performed on the plurality of to-be-processed images by taking the base image as the base frame, to obtain the second fusion denoised image. Further, the processed image may be obtained according to the second fusion denoised image.

Herein, the manner of multi-frame denoising synthesis may be implemented through an existing multi-frame fusion denoising means. Obtaining the processed image according to the second fusion denoised image may include directly using the second fusion denoised image as the obtained processed image, or using the second fusion denoised image as the obtained processed image after processing such as cropping is performed on the second fusion denoised image.

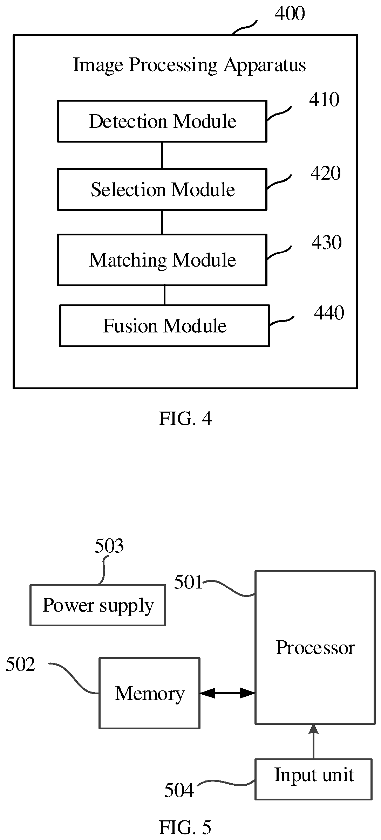

In order to facilitate better implementation of the image processing method provided in the embodiments of the present disclosure, the embodiments of the present disclosure further provide an image processing apparatus based on the above image processing method. Meanings of terms are the same as those in the above image processing method, and specific implementation details may refer to descriptions in the method embodiments. FIG. 4 illustrates a block diagram of an image processing apparatus according to an embodiment of the present disclosure.

As illustrated in FIG. 4, the image processing apparatus 400 may include: a detection module 410 configured to perform image detection on a plurality of to-be-processed images to obtain image quality information and eye-opening state information corresponding to each of the to-be-processed images; a selection module 420 configured to select, from the plurality of to-be-processed images, a to-be-processed image of which the image quality information satisfies a predetermined quality condition, to obtain a base image; a matching module 430 configured to select, from the plurality of to-be-processed images, a to-be-processed image of which the eye-opening state information matches the base image, to obtain an eye image; and a fusion module 440 configured to perform multi-frame fusion processing on the plurality of to-be-processed images based on the base image and the eye image, to obtain a processed image.

In some embodiments of the present disclosure, the fusion module is configured to: in response to the base image and the eye image not being a same image, perform multi-frame denoising synthesis on the plurality of to-be-processed images by taking the base image as a base frame, to obtain a first fusion denoised image; and fuse an eye region in the eye image into the first fusion denoised image, to obtain the processed image.

In some embodiments of the present disclosure, the eye-opening state information is information used for describing whether eyes are in an opened state. The matching module is configured to: select, from the plurality of to-be-processed images according to the eye-opening state information corresponding to each of the to-be-processed images, a to-be-processed image in which the eyes are in the opened state; and select, from the to-be-processed image in which the eyes are in the opened state, a to-be-processed image having a highest image quality, to obtain the eye image.

In some embodiments of the present disclosure, the eye-opening state information is information used for describing an eye-opening degree and an eye-opening posture of eyes. The matching module is configured to: perform object feature extraction processing on the base image, to obtain object feature data; obtain object state information according to the object feature data, wherein the object state information is information used for describing an object posture of a target object; and perform matching analysis between the eye-opening state information of each of the to-be-processed images and the object state information, to obtain the eye image, wherein the eye image is a to-be-processed image corresponding to eye-opening state information matching the object state information.

In some embodiments of the present disclosure, the matching module is configured to: perform state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and select one to-be-processed image according to the state fusion score corresponding to each of the to-be-processed images, to obtain the eye image.

In some embodiments of the present disclosure, the object state information includes face state information and body state information of the target object. The matching module is configured to: perform state combination scoring on the eye-opening state information of each of the to-be-processed images and the face state information respectively, to obtain a first score corresponding to each of the to-be-processed images; perform state combination scoring on the eye-opening state information of each of the to-be-processed images and the body state information respectively, to obtain a second score corresponding to each of the to-be-processed images; and obtain the state fusion score corresponding to each of the to-be-processed images according to the first score and the second score corresponding to each of the to-be-processed images.

In some embodiments of the present disclosure, the matching module is configured to: obtain a weighting coefficient matching the object state information according to the object state information; and perform weighted summation on the first score and the second score corresponding to each of the to-be-processed images according to the weighting coefficient respectively, to obtain the state fusion score corresponding to each of the to-be-processed images.

In some embodiments of the present disclosure, the fusion module is configured to: in response to the base image and the eye image being a same image, perform multi-frame denoising synthesis on the plurality of to-be-processed images by taking the base image as a base frame, to obtain a second fusion denoised image; and obtain the processed image according to the second fusion denoised image.

In some embodiments of the present disclosure, the selection module is configured to implement one of following manners: selecting, from the plurality of to-be-processed images according to the image quality information in each of the to-be-processed images, a to-be-processed image having a highest image quality, to obtain the base image; or selecting, from the plurality of to-be-processed images according to the image quality information in each of the to-be-processed images, one or more to-be-processed images having an image quality higher than a predetermined quality threshold, to obtain the base image.

In some embodiments of the present disclosure, the image quality information includes, but is not limited to, one or more of image sharpness, resolution, contrast, brightness, noise level, color balance, image distortion degree, and aberration degree.

It should be noted that, although several modules or units of a device for action execution are mentioned in the above detailed description, such division is not mandatory. In fact, according to the embodiments of the present disclosure, features and functions of two or more modules or units described above may be embodied in one module or unit. Conversely, features and functions of one module or unit described above may be further divided to be embodied by multiple modules or units.

In addition, the embodiments of the present disclosure further provide an electronic device. As illustrated in FIG. 5, FIG. 5 illustrates a block diagram of an electronic device according to an embodiment of the present disclosure.

The electronic device may include components such as a processor 501 having one or more processing cores, a memory 502 including one or more computer-readable storage media, a power supply 503, and an input unit 504. Those skilled in the art may understand that the electronic device structure illustrated in FIG. 5 does not constitute limitation to the electronic device, and may include more or fewer components than those illustrated, or combine certain components, or adopt different component arrangements.

The processor 501 is a control center of the electronic device, and connects various portions of the entire computer device through various interfaces and lines. By running or executing software programs and/or modules stored in the memory 502, and invoking data stored in the memory 502, the processor 501 executes various functions of the computer device and processes data, thereby performing overall monitoring of the electronic device. Optionally, the processor 501 may include one or more processing cores. Preferably, the processor 501 may integrate an application processor and a modem processor, wherein the application processor mainly processes an operating system, a user interface, application programs, and the like, and the modem processor mainly processes wireless communication. It can be understood that the above modem processor may alternatively not be integrated into the processor 501.

The memory 502 may be configured to store software programs and modules. The processor 501 executes various functional applications and data processing by running the software programs and modules stored in the memory 502. The memory 502 may mainly include a program storage area and a data storage area, wherein the program storage area may store an operating system, application programs required by at least one function (such as a sound playback function, an image playback function, and the like), and the like. The data storage area may store data created according to use of the computer device, and the like. In addition, the memory 502 may include a high-speed random access memory, and may further include a non-volatile memory, such as at least one magnetic disk storage device, a flash memory device, or another volatile solid-state storage device. Correspondingly, the memory 502 may further include a memory controller to provide the processor 501 with access to the memory 502.

The electronic device further includes the power supply 503 configured to supply power to various components. Preferably, the power supply 503 may be logically connected to the processor 501 through a power management system, so as to implement functions such as charging management, discharging management, and power consumption management through the power management system. The power supply 503 may further include any component such as one or more direct current or alternating current power supplies, a rechargeable system, a power failure detection circuit, a power converter or inverter, and a power status indicator.

The electronic device may further include the input unit 504. The input unit 504 may be configured to receive input digital or character information, and generate signal input related to user setting and function control, such as keyboard, mouse, joystick, optical, or trackball signal input.

Although not illustrated, the electronic device may further include a display unit and the like, which will not be described herein again. Specifically, in the present embodiment, the processor 501 in the electronic device loads executable files corresponding to one or more computer programs into the memory 502 according to following instructions, and runs the computer programs stored in the memory 502 through the processor 501, thereby implementing various functions in the foregoing embodiments of the present disclosure. For example, the processor 501 may execute following steps:

performing image detection on a plurality of to-be-processed images to obtain image quality information and eye-opening state information corresponding to each of the to-be-processed images; selecting, from the plurality of to-be-processed images, a to-be-processed image of which the image quality information satisfies a predetermined quality condition, to obtain a base image; selecting, from the plurality of to-be-processed images, a to-be-processed image of which the eye-opening state information matches the base image, to obtain an eye image; and performing multi-frame fusion processing on the plurality of to-be-processed images based on the base image and the eye image, to obtain a processed image.

In some embodiments of the present disclosure, the performing the multi-frame fusion processing on the plurality of to-be-processed images based on the base image and the eye image, to obtain the processed image, includes: in response to the base image and the eye image not being a same image, performing multi-frame denoising synthesis on the plurality of to-be-processed images by taking the base image as a base frame, to obtain a first fusion denoised image; and fusing an eye region in the eye image into the first fusion denoised image, to obtain the processed image.

In some embodiments of the present disclosure, the eye-opening state information is information used for describing whether eyes are in an opened state. The selecting, from the plurality of to-be-processed images, the to-be-processed image of which the eye-opening state information matches the base image, to obtain the eye image, includes: selecting, from the plurality of to-be-processed images according to the eye-opening state information corresponding to each of the to-be-processed images, a to-be-processed image in which the eyes are in the opened state; and selecting, from the to-be-processed image in which the eyes are in the opened state, a to-be-processed image having a highest image quality, to obtain the eye image.

In some embodiments of the present disclosure, the eye-opening state information is information used for describing an eye-opening degree and an eye-opening posture of eyes. The selecting, from the plurality of to-be-processed images, the to-be-processed image of which the eye-opening state information matches the base image, to obtain the eye image, includes: performing object feature extraction processing on the base image, to obtain object feature data; obtaining object state information according to the object feature data, wherein the object state information is information used for describing an object posture of a target object; and performing matching analysis between the eye-opening state information of each of the to-be-processed images and the object state information, to obtain the eye image, wherein the eye image is a to-be-processed image corresponding to eye-opening state information matching the object state information.

In some embodiments of the present disclosure, the performing the matching analysis between the eye-opening state information of each of the to-be-processed images and the object state information, to obtain the eye image, includes: performing state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and selecting one to-be-processed image according to the state fusion score corresponding to each of the to-be-processed images, to obtain the eye image.

In some embodiments of the present disclosure, the object state information includes face state information and body state information of the target object. The performing the state combination scoring processing on the eye-opening state information of each of the to-be-processed images and the object state information respectively, to obtain the state fusion score corresponding to each of the to-be-processed images, includes: performing state combination scoring on the eye-opening state information of each of the to-be-processed images and the face state information respectively, to obtain a first score corresponding to each of the to-be-processed images; performing state combination scoring on the eye-opening state information of each of the to-be-processed images and the body state information respectively, to obtain a second score corresponding to each of the to-be-processed images; and obtaining the state fusion score corresponding to each of the to-be-processed images according to the first score and the second score corresponding to each of the to-be-processed images.

In some embodiments of the present disclosure, the obtaining the state fusion score corresponding to each of the to-be-processed images according to the first score and the second score corresponding to each of the to-be-processed images, includes: obtaining a weighting coefficient matching the object state information according to the object state information; and performing weighted summation on the first score and the second score corresponding to each of the to-be-processed images according to the weighting coefficient respectively, to obtain the state fusion score corresponding to each of the to-be-processed images.

In some embodiments of the present disclosure, the performing the multi-frame fusion processing on the plurality of to-be-processed images based on the base image and the eye image, to obtain the processed image, includes: in response to the base image and the eye image being a same image, performing multi-frame denoising synthesis on the plurality of to-be-processed images by taking the base image as a base frame, to obtain a second fusion denoised image; and obtaining the processed image according to the second fusion denoised image.

In some embodiments of the present disclosure, the selecting, from the plurality of to-be-processed images, the to-be-processed image of which the image quality information satisfies the predetermined quality condition, to obtain the base image, includes one of following manners: selecting, from the plurality of to-be-processed images according to the image quality information in each of the to-be-processed images, a to-be-processed image having a highest image quality, to obtain the base image; or selecting, from the plurality of to-be-processed images according to the image quality information in each of the to-be-processed images, one or more to-be-processed images having an image quality higher than a predetermined quality threshold, to obtain the base image.

In some embodiments of the present disclosure, the image quality information includes, but is not limited to, one or more of image sharpness, resolution, contrast, brightness, noise level, color balance, image distortion degree, and aberration degree.

Those skilled in the art may understand that all or part of steps in various methods of the above embodiments may be implemented through a computer program, or implemented by controlling related hardware through a computer program. The computer program may be stored in a computer-readable storage medium and loaded and executed by a processor.

Accordingly, the embodiments of the present disclosure further provide a storage medium, wherein a computer program is stored therein, and the computer program may be loaded by a processor to execute steps in any one of methods provided in the embodiments of the present disclosure.

Wherein, the storage medium may be a computer-readable storage medium. The storage medium may include: a Read Only Memory (ROM), a Random Access Memory (RAM), a magnetic disk, an optical disk, and the like.

Since the computer program stored in the storage medium may execute steps in any one of methods provided in the embodiments of the present disclosure, beneficial effects achievable by methods provided in the embodiments of the present disclosure may be implemented. For details, reference may be made to the foregoing embodiments, and details are not repeated herein again.

After considering the specification and practicing implementations disclosed herein, other implementations of the present disclosure will be readily conceived by those skilled in the art. The present disclosure is intended to cover any variations, uses, or adaptive changes of the present disclosure. Such variations, uses, or adaptive changes follow general principles of the present disclosure and include common general knowledge or conventional technical means in the technical field not explicitly disclosed in the present disclosure.

It should be understood that the present disclosure is not limited to embodiments described above and illustrated in the accompanying drawings, and various modifications and changes may be made without departing from a scope thereof.

## Claims

1. A method for image processing, comprising:
performing image detection on a plurality of to-be-processed images to obtain image quality information and eye-opening state information corresponding to each of the to-be-processed images;
selecting, from the plurality of to-be-processed images, a to-be-processed image of which the image quality information satisfies a predetermined quality condition, to obtain a base image;
selecting, from the plurality of to-be-processed images, a to-be-processed image of which the eye-opening state information matches the base image, to obtain an eye image; and
performing multi-frame fusion processing on the plurality of to-be-processed images based on the base image and the eye image, to obtain a processed image.

2. The method according to claim 1, wherein the performing the multi-frame fusion processing on the plurality of to-be-processed images based on the base image and the eye image, to obtain the processed image, comprises:
in response to the base image and the eye image not being a same image, performing multi-frame denoising synthesis on the plurality of to-be-processed images by taking the base image as a base frame, to obtain a first fusion denoised image; and
fusing an eye region in the eye image into the first fusion denoised image, to obtain the processed image.

3. The method according to claim 1, wherein the eye-opening state information is information used for describing whether eyes are in an opened state;
the selecting, from the plurality of to-be-processed images, the to-be-processed image of which the eye-opening state information matches the base image, to obtain the eye image, comprises:
selecting, from the plurality of to-be-processed images according to the eye-opening state information corresponding to each of the to-be-processed images, a to-be-processed image in which the eyes are in the opened state; and
selecting, from the to-be-processed image in which the eyes are in the opened state, a to-be-processed image having a highest image quality, to obtain the eye image.

4. The method according to claim 1, wherein the eye-opening state information is information used for describing an eye-opening degree and an eye-opening posture of eyes;
the selecting, from the plurality of to-be-processed images, the to-be-processed image of which the eye-opening state information matches the base image, to obtain the eye image, comprises:
performing object feature extraction processing on the base image, to obtain object feature data;
obtaining object state information according to the object feature data, wherein the object state information is information used for describing an object posture of a target object; and
performing matching analysis between the eye-opening state information of each of the to-be-processed images and the object state information, to obtain the eye image, wherein the eye image is a to-be-processed image corresponding to eye-opening state information matching the object state information.

5. The method according to claim 4, wherein the performing the matching analysis between the eye-opening state information of each of the to-be-processed images and the object state information, to obtain the eye image, comprises:
performing state combination scoring processing on the eye-opening state information of each of the to-be-processed images and the object state information respectively, to obtain a state fusion score corresponding to each of the to-be-processed images, wherein the state fusion score is a state fusion score between eyes in the to-be-processed image and the target object in the base image; and
selecting one to-be-processed image according to the state fusion score corresponding to each of the to-be-processed images, to obtain the eye image.

6. The method according to claim 5, wherein the object state information comprises face state information and body state information of the target object;
the performing the state combination scoring processing on the eye-opening state information of each of the to-be-processed images and the object state information respectively, to obtain the state fusion score corresponding to each of the to-be-processed images, comprises:
performing state combination scoring on the eye-opening state information of each of the to-be-processed images and the face state information respectively, to obtain a first score corresponding to each of the to-be-processed images;
performing state combination scoring on the eye-opening state information of each of the to-be-processed images and the body state information respectively, to obtain a second score corresponding to each of the to-be-processed images; and
obtaining the state fusion score corresponding to each of the to-be-processed images according to the first score and the second score corresponding to each of the to-be-processed images.

7. The method according to claim 6, wherein the obtaining the state fusion score corresponding to each of the to-be-processed images according to the first score and the second score corresponding to each of the to-be-processed images, comprises:
obtaining a weighting coefficient matching the object state information according to the object state information; and
performing weighted summation on the first score and the second score corresponding to each of the to-be-processed images according to the weighting coefficient respectively, to obtain the state fusion score corresponding to each of the to-be-processed images.

8. The method according to claim 1, wherein the performing the multi-frame fusion processing on the plurality of to-be-processed images based on the base image and the eye image, to obtain the processed image, comprises:
in response to the base image and the eye image being a same image, performing multi-frame denoising synthesis on the plurality of to-be-processed images by taking the base image as a base frame, to obtain a second fusion denoised image; and
obtaining the processed image according to the second fusion denoised image.

9. The method according to claim 1, wherein the selecting, from the plurality of to-be-processed images, the to-be-processed image of which the image quality information satisfies the predetermined quality condition, to obtain the base image, comprises one of following manners:
selecting, from the plurality of to-be-processed images according to the image quality information in each of the to-be-processed images, a to-be-processed image having a highest image quality, to obtain the base image; or
selecting, from the plurality of to-be-processed images according to the image quality information in each of the to-be-processed images, one or more to-be-processed images having an image quality higher than a predetermined quality threshold, to obtain the base image.

10. The method according to claim 1, wherein the image quality information comprises one or more of image sharpness, resolution, contrast, brightness, noise level, color balance, image distortion degree, and aberration degree.

11. The method according to claim 6, wherein the obtaining the state fusion score corresponding to each of the to-be-processed images according to the first score and the second score corresponding to each of the to-be-processed images, comprises:
performing addition calculation or multiplication calculation on the first score and the second score corresponding to each of the to-be-processed images, to obtain the state fusion score corresponding to each of the to-be-processed images.

12. The method according to claim 6, wherein the obtaining the state fusion score corresponding to each of the to-be-processed images according to the first score and the second score corresponding to each of the to-be-processed images, comprises:
obtaining a unified weighting coefficient; and
performing weighted summation on the first score and the second score corresponding to each of the to-be-processed images according to the unified weighting coefficient respectively, to obtain the state fusion score corresponding to each of the to-be-processed images.

13. The method according to claim 5, wherein the object state information comprises face state information of the target object;
the performing the state combination scoring processing on the eye-opening state information of each of the to-be-processed images and the object state information respectively, to obtain the state fusion score corresponding to each of the to-be-processed images, comprises:
performing state combination scoring on the eye-opening state information of each of the to-be-processed images and the face state information respectively, to obtain a first score corresponding to each of the to-be-processed images; and
obtaining the state fusion score corresponding to each of the to-be-processed images according to the first score corresponding to each of the to-be-processed images.

14. The method according to claim 5, wherein the performing the state combination scoring processing on the eye-opening state information of each of the to-be-processed images and the object state information respectively, to obtain the state fusion score corresponding to each of the to-be-processed images, comprises:
performing the state combination scoring processing on the eye-opening state information and the object state information of each of the to-be-processed images respectively by using a preset state fusion scoring neural network, to obtain the state fusion score corresponding to each of the to-be-processed images.

15. An image processing apparatus, comprising:
a detection module, configured to perform image detection on a plurality of to-be-processed images to obtain image quality information and eye-opening state information corresponding to each of the to-be-processed images;
a selection module, configured to select, from the plurality of to-be-processed images, a to-be-processed image of which the image quality information satisfies a predetermined quality condition, to obtain a base image;
a matching module, configured to select, from the plurality of to-be-processed images, a to-be-processed image of which the eye-opening state information matches the base image, to obtain an eye image; and
a fusion module, configured to perform multi-frame fusion processing on the plurality of to-be-processed images based on the base image and the eye image, to obtain a processed image.

16. The apparatus according to claim 15, wherein the fusion module is configured to:
in response to the base image and the eye image not being a same image, perform multi-frame denoising synthesis on the plurality of to-be-processed images by taking the base image as a base frame, to obtain a first fusion denoised image; and
fuse an eye region in the eye image into the first fusion denoised image, to obtain the processed image.

17. The apparatus according to claim 15, wherein the eye-opening state information is information used for describing whether eyes are in an opened state;
the matching module is configured to: select, from the plurality of to-be-processed images according to the eye-opening state information corresponding to each of the to-be-processed images, a to-be-processed image in which the eyes are in the opened state; and
select, from the to-be-processed image in which the eyes are in the opened state, a to-be-processed image having a highest image quality, to obtain the eye image.

18. The apparatus according to claim 15, wherein the eye-opening state information is information used for describing an eye-opening degree and an eye-opening posture of eyes;
the matching module is configured to: perform object feature extraction processing on the base image, to obtain object feature data;
obtain object state information according to the object feature data, wherein the object state information is information used for describing an object posture of a target object; and
perform matching analysis between the eye-opening state information of each of the to-be-processed images and the object state information, to obtain the eye image, wherein the eye image is a to-be-processed image corresponding to eye-opening state information matching the object state information.

19. A computer-readable storage medium storing computer program executable by a processor to implement the method as claimed in any one of claims 1-14.

20. An electronic device, comprising:
a processor; and
a memory, storing computer program executable by the processor to implement the method as claimed in any one of claims 1-14.
